# EUROPÄISCHE PATENTANMELDUNG

(11) **EP 3 094 085 A1**
(43) Veröffentlichungstag der Anmeldung: **16.11.2016**
(21) Anmeldenummer: 16169275.1
(22) Anmeldetag: 12.05.2016
(51) Int. Cl.: H04N 7/10, H04H 20/63, H04H 40/90, H04N 7/20, H04N 21/214, H04N 21/438

(54) **SYSTEM ZUM EMPFANG VON TELEKOMMUNIKATIONSIGNALEN, INSBESONDERE VON FERNSEHSIGNALEN IN MATV/SMATV-NETZEN**

(30) Priorität: 12.05.2015 ES 201500369
(71) Anmelder: Televés, S.A., 15706 Santiago de Compostela (ES)
(72) Erfinder: RODAL PEREZ, Justo, 15706 Santiago de Compostela (ES); FERNANDEZ CARNERO, José Luis, 15706 Santiago de Compostela (ES)
(74) Vertreter: Dosterschill, Peter

(57) **Zusammenfassung**

Die Erfindung betrifft ein System zum Empfang von Telekommunikationsignalen, insbesondere von Fernsehsignalen in MATV/SMATV-Netzen, das wenigstens eine Signalaufnahmeeinheit (ECS1) mit wenigstens einer Antenne (ANT1) und wenigstens eine Kopfeinheit (EC1) aufweist, in der eine Steuerungseinheit (D1) angeordnet ist. Die Steuerungseinheit (D1) ist in der Weise ausgestaltet, dass sie von einem systemexternen Signal (S2) gesteuert wird, wobei das systemexterne Signal (S2) über die Antenne (ANT1) und/oder über eine Schnittstelle (10) des Systems empfangen wird. Bei Änderungen in einer Übertragungsquelle oder Änderungen von Übertragungsparamtern wird das System durch das systemexterne Signal (S2) gesteuert, ohne dass auf systeminterne Komponenten zuzugreifen ist.

## Beschreibung

Die vorliegende Erfindung betrifft ein System zum Empfang von Telekommunikationsignalen, insbesondere von Fernsehsignalen in MATV/SMATV-Netzen, nach dem Oberbegriff des Patentanspruchs 1.

Es sind MATV(Master Antenna Television)-Netze und SMATV (Satelite Master Antenna Television)-Netze bekannt, die Netze zum Empfang, zur Bearbeitung und zur Verteilung von Telekommunikationsignalen sind, und die mittels gemeinsamer Mittel oder mittels einer gemeinsamen Einrichtung den Transport der verschiedenen Telekommunikationsignale (Telekommunikationsdienste) zu den unterschiedlichen Benutzern einer Gemeinschaft von Nachbarn ermöglichen. Diese Netze weisen grundsätzlich ein System zur Aufnahme von Signalen (Signalaufnahmesystem) auf, ein System zur Bearbeitung von Signalen (Kopfeinheit oder Kopfeinrichtung) und ein System zur Verteilung der Signale (Verteilungsnetz) auf. Das Verteilungsnetz besteht aus einem Netz der gemeinsamen Verteilung (gemeinsam für alle Benutzer) und aus einem individuellen Netz (oder Wohnungsnetz) innerhalb der Wohnung des Benutzers. Im Fall der MATV/SMATV-Netze eines einzelnen Benutzers oder eines Einzelobjekts ist kein Netz der gemeinsamen Verteilung vorhanden, so dass das Verteilungsnetz auf das individuelle Netz (oder das Wohnungsnetz) eingeschränkt ist.

Ursprünglich waren die MATV(Master Antenna TV)-Netze ausschließlich für den Empfang, die Bearbeitung und die Verteilung von Signalen des terrestrischen Fernsehens bestimmt und bestanden im Allgemeinen aus einer Einrichtung zur Aufnahme von Signalen durch eine Antenne des terrestrischen Fernsehens, aus einer Kopfeinheit, bestehend aus einem Verstärker, und aus einem Verteilungsnetz mit Gehäusen zur Durchschaltung/Verbindung zum Benutzer.

Später mit der Einführung des Satelliten-Fernsehens wurden die MATV-Netze als SMATV-Netze bezeichnet und ihre Komplexität wurde erweitert. So wurden neue Signalaufnahmeeinrichtungen (zum Beispiel Parabolantennen für den Empfang von Satellitensignalen) eingeführt, die Kopfeinheiten waren nicht mehr nur Verstärker, sondern es wurden Umwandlungseinrichtungen, Transmodulatoren, Signalbearbeitungseinrichtungen, etc. in die Kopfeinheiten eingefügt. Ebenso wurde das Verteilungsnetz sehr viel komplexer ausgestaltet durch eine Erhöhung der Signalfrequenz und eine Vergrößerung der Bandbreite des übermittelten Bandes, womit sich Verluste bei der Verteilung so wie Probleme hinsichtlich der Strahlung des Netzes, bei der Qualität und der Komplexität sowohl bei den Verteilungselementen als auch in den Kabeln des Verteilungsnetzes ergaben.

Zur Zeit ist im Markt eine große Anzahl von Einrichtungen für diesen Typ von Telekommunikationsnetzen (MATV/SMATV-Netzen) vorhanden. Diese Einrichtungen betreffen Aspekte des Empfangs, der Anpassung und der Verteilung von Fernsehsignalen und von Ton-Rundfunksignalen sowohl im terrestrischen Bereich als auch im Satellitenbereich. Jedoch hat vor Kurzem die Zunahme der Telekommunikationdienste (Videodienste a la carte auf Bestellung, Telefonie, Überwachung, Sicherheit, Energiesteuerung, etc.) und die Zunahme der Nachfrage nach den traditionell angebotenen Diensten (terrestrisches Fernsehen, Satelliten-Fernsehen) über die MATV/SMATV-Netze die Entwicklung neuer Einrichtungen und Verfahren erforderlich gemacht, die den aktuellen Bedürfnissen entsprechen.

In dem besonderen Fall des Empfangs von Satelliten-Fernsehsignalen erfolgt dieser über eine oder mehrere Vorrichtungen, die mit LNB (Low Noise Block) bezeichnet werden und die die Signale aufnehmen, die von der Signalaufnahmeeinheit von einer oder mehreren Antennen, im Allgemeinen Parabolantennen, empfangen werden. Diese Vorrichtung besteht grundsätzlich aus einem Frequenzmischer, aus einem oder mehreren lokalen Oszillatoren und aus einem Zwischenfrequenzverstärker (950 MHz bis 2.150 MHz). Diese Vorrichtung LNB liefert an ihrem Ausgang die vom Satelliten empfangenen Signale im Band von 10.700 MHz bis 12.750 MHz und übermittelt sie an die Kopfeinheit des MATV/SMATV-Netzes im Band von 950 MHz bis 2.150 MHz.

Zur Zeit werden die Satelliten-Fernsehdienste in dem mit BSS (Broadcasting Satellite Service) benannten Band übermittelt, das aus zwei Subbändern besteht, aus einem Unterband 10.700 MHz bis 11.700 MHz und aus einem Oberband von 11.700 MHz bis 12.750 MHz. Ebenso und mit dem Ziel, die Anzahl der übertragbaren Satellitenfernsehdienste zu erhöhen, überträgt man Signale derselben Frequenz aber unterschiedlicher Polarität, einige mit horizontaler Polarität und andere mit vertikaler Polarität. Dies ermöglicht es, die Anzahl der Transponder zu verdoppeln, die im Band BSS übermittelt werden. Dabei bezeichnet Transponder eine Gruppe in einem bestimmten Kanal übermittelter Dienste, womit die Kapazität des Aufnahmesystems der Signale des MATV/SMATV-Netzes vergrößert wird, um zwischen beiden Polaritäten zu unterscheiden. Andererseits ist das Band, das für die Verteilung von Satellitensignalen in den MATV/SMATV-Netzen bestimmt ist, eingeschränkt auf das Band von 950 MHz bis 2.150 MHz, was bedeutetet, dass man nur über 1.200 MHz verfügt, um die Satellitenfernsehdienste zu verteilen.

Wenn man dies berücksichtigt, so wird das Problem deutlich, eine Bandbreite von 4.100 MHz zu verteilen, entsprechend der horizontalen und der vertikalen Polarität der beiden Satelliten-Subbänder mit ihren entsprechenden Polaritäten in einer Bandbreite, die in den MATV / SMATV-Netzen verfügbar ist und 1.200 MHz beträgt. Dies wäre so für einen einzigen empfangenen Satelliten-Übertrager, aber in dem Umfang, dass die Anzahl der Satelliten-Übertrager, deren Dienste empfangen werden sollen, erhöht wird, aber auch die Kapazität des Empfangs des Aufnahmesystems und aus diesem Grund vergrößert sich das Problem.

In den individuellen MATV/SMATV-Netzen wird das Problem mit der Benutzung von Orientierungssystemen der Antenne der verschiedenen gewünschten Satelliten gelöst (motorisiere Antenne oder System mit Multisatellit-Aufnahme), mit der Benutzung von LNBs mit Umschaltungskapazität des empfangenen Satellitenbandes (Unterband von 10.700 MHz bis 11.700 MHz oder Oberband von 11.700 MHz bis 12.750 MHz) und mit der Kapazität der Unterscheidung von Polaritäten (horizontale Polarität oder vertikale Polarität). Über einen Satellitenempfänger (Set Top Box, STB) kann der (einzige) Benutzer den entsprechenden LNB konfigurieren und das entsprechende Band und die Polarität des gewünschten Kanals auswählen.

Auf diese Weise verteilt man nach Auswahl des (einzigen) Benutzers die im MATV/SMAT-Netz verfügbaren 1.200 MHz:
- Unterband (1.000 MHz) mit horizontaler Polarität, oder
- Unterband (1.000 MHz) mir vertikaler Polarität, oder
- Oberband (1.050 MHz.) mit horizontaler Polarität, oder
- Oberband (1.050 MHz.) mit vertikaler Polarität.

In der Praxis ist diese Auswahl für den Benutzer transparent, der den bevorzugten Kanal des Satellitenfernsehens auswählt und die jeweilige Set Top Box STB wirkt auf den LNB (und im Fall, dass mehr als ein Satellit empfangen wird, über die Antenne), im Allgemeinen mittels der Übermittlung einer Kombination aus Spannung und Ton, womit das Band und die Polarität des Empfangs des entsprechend ausgewählten Kanals festgelegt wird.

Im Fall der MATV/SMATV-Netze mit mehr als einem Benutzer können die Set Top Boxen STB den LNB nicht individuell per Kommandos steuern, wobei aus diesem Grund der Ausgang des LNB auf eine der Bänder BSS (10.700 MHz bis 11.700 MHz; 11.700 MHz bis 12.750 MHz) und auf eine Polarität (vertikale Polarität oder horizontale Polarität) eingeschränkt ist.

Dies bedeutet eine Einschränkung zu dem Zeitpunkt, zu dem die Satellitenfernseh-Kanäle, die in einem MATV/SMATV-Netz mit mehr als einem Benutzer zu verteilen sind, da grundsätzlich im selben Netz nicht gleichzeitig Fernsehkanäle von verschiedenen Satelliten übertragen werden können, und ebenso wenig in unterschiedlichen Bändern und/oder in unterschiedlicher Polarität.

Ergänzend hierzu ist darauf hinzuweisen, dass außer dem kostenfreien Betrieb Betreiber den Benutzern Satellitenfernsehdienste in vielen Fällen gegen Zahlung anbieten. Im Allgemeinen umfasst das Angebot dieser Betreiber eine Vielzahl von Satellitenfernsehdiensten, welches mit "Bouquet" bezeichnet wird.

Wenn das "Bouquet", das ein bestimmter Betreiber von Satellitenfernsehdiensten anbietet, aus Diensten desselben Satelliten anbietet, desselben Bandes und derselben Polarität, erfolgt die Verteilung über das MATV/ SMATV-Netz unmittelbar und stellt kein Problem dar. Andernfalls jedoch, wenn dies nicht gegeben ist, und die Dienste, die das "Bouquet" des Betreibers bilden, sich in verschiedenen Satelliten und/oder in verschiedenen Bändern befinden und/oder mit verschiedenen Polaritäten erfolgt, sind Techniken einzusetzen, die die Verteilung des kompletten "Bouquets" über das MATV / SMATV-Netz ermöglichen.

Um diese Verteilung durchzuführen, hat man verschiedene Verteilungssysteme für die Verteilung von Satellitenfernsehdiensten in MATV/ SMATV-Netzen entwickelt.

Eine dieser Lösungen besteht in einem System der Transmodulation von Fernsehkanälen. Es besteht in der Transformation der Satellitenfernsehkanäle in Kanäle des terrestrischen Fernsehens und in ihrer Verteilung als terrestrische Kanäle im UHF-Band (470 MHz bis 790 MHz). Diese Lösung hat den Nachteil, dass die Kopfeinheit vergrößert wird und sich die Kosten hierfür spürbar erhöhen.

Eine weitere dieser Lösungen ist ein Verteilungssystem mit Mehrfachschaltern. Sie besteht darin, das Gemeinschafts-MATV/SMATV-Verteilungsnetz in eine Mehrzahl von individuellen Netzen, jeweils für einen einzigen Benutzer, umzuwandeln. Diese Lösung weist den Nachteil auf, dass das Gemeinschaftsverteilungsnetz außerordentlich komplex ausgestaltet wird, indem Umschaltelemente in das Verteilungsnetz eingefügt werden und damit die Wahrscheinlichkeit für einen Ausfall des Netzes erhöht wird.

Eine weitere Lösung ist die Benutzung eines Verteilungsnetzes, basierend in der Benutzung von Kanalprozessoren. Es besteht darin, die Kanäle auszuwählen (bis 32, was das erlaubte Maximum im Verteilungsband 950 - 2.150 MHz ist, wobei die typische Bandbreite eines Satellitenkanals berücksichtigt wird), dies aus den am Ausgang oder an den Ausgängen des LNB oder der LNBs anliegenden Kanälen (jeder Ausgang ein Satellit, ein Band und eine Polarität) der Signalaufnahmeeinrichtung im Band von 950 MHz bis 2.150 MHz und sie dem MATV/SMATV-Netz im selben Band von 950 MHz bis 2.150 MHz für ihre Verteilung zu übergeben. Grundsätzlich besteht diese Lösung in der Eliminierung und der neuen Anordnung der Ausgangskanäle der LNBs und in ihrer späteren Verteilung über das MATV/SMATV-Netz, dies im selben Band (950 MHz bis 2.150 MHz). Diese Lösung hat den Nachteil, dass die Kopfeinrichtung vergrößert wird und spürbar die Kosten der Verteilung über das MATV/SMATV-Netz erhöht, wobei außerdem die Anzahl der Fernsehdienste, die über das Netz verteilt werden können, eingeschränkt wird.

Aus der US 5,073,930 ist ein Verfahren und ein System zum Empfang und zur Verteilung von satellitenübertragenen Fernsehsignalen bekannt. Das System weist eine Transponderumwandlungs-Einheit auf, die im Frequenzbereich einer typischen Umwandlung von 950 - 1450 MHz arbeitet und eine Konfiguration der Kopfeinheit ermöglicht, mit der Transponder von einem oder mehreren Satelliten mit horizontaler oder vertikaler Polarisierung ausgewählt werden. Der Betrieb des Systems setzt voraus, dass entsprechend qualifiziertes Personal manuelle Eingaben vornimmt, womit sich die Gefahr für Fehleingaben ergibt, die zu Konfigurationsfehlern führen.

Aus dem Dokument ES 2 174 001 ist auch ein Satellitenempfänger mit einer steuerbaren Kopfeinheit bekannt. Die entsprechende Steuerung der Kopfeinheit dient dazu, die Privatsphäre des Benutzers zu schützen. Dieser Empfänger gibt dem Benutzer beziehungsweise den Benutzern Zugang zu den unterschiedlichen verfügbaren Diensten, wobei ein Ausgangskanal zufällig bei jedem Zugriff zugeordnet wird, wobei der gewünschte Dienst ausgehend von einer festen Zuordnung der unterschiedlichen Eingangskanäle ausgewählt wird. Jedoch beeinflusst die Steuerung seitens des Benutzers nicht die Konfiguration der Eingangskanäle, die für den Benutzer verfügbar sind.

Eine weitere Lösung besteht in einem Verteilungssystem mittels der Benutzung optimierter LNBs. Sie besteht darin, gewünschte Abschnitte des Bandes BSS in einer oder in einer weiteren Polarität der Satellitenfernsehsignale auszuwählen und im Ausgang des LNB im Band von 950 MHz bis 2.150 MHz anzuordnen. Dies erfolgt mittels der Benutzung verschiedener lokaler Oszillatoren in dem LNB.

Eine Weiterentwicklung der optimierten LNBs stellen die mit DCSS (Digital Channel Stracking System-LNBs) bezeichneten LNBs dar. Diese sind in der Weise ausgestaltet, dass Kanäle so bearbeitet werden, dass nach vorheriger Programmierung ein Kanal nach dem anderen innerhalb des gesamten BSS-Bandes ausgewählt werden kann sowie eine Polarität der gewünschten Kanäle nach der anderen, wobei die Kanäle an den Ausgängen in dem Verteilungsband der MATV/SMATV-Netze (950 MHz bis 2.150 MHz) in der gewünschten Frequenz ausgegeben werden.
Die Benutzung der optimierten LNBs und/oder der DCSS-LNBs hat den Nachteil, der abgeleitet von den dynamischen Anordnungen in Frequenz und Polarität der Kanäle ist entsprechend den Fernsehtranspondern, die das "Bouquet" eines bestimmten Betreibers von Satellitenfernseh-Diensten enthalten. Diese Fernsehtransponder eines bestimmten "Bouquet" können die Frequenzen, die Polarität und selbst den Satelliten ändern und folglich in dem Verteilungsband (950 MHz bis 2.150 MHz) des MATV/ SMATV-Netzes verschwinden, außer dass der LNB modifiziert wird und sein lokaler Oszillator für das neue Verteilungsszenario geändert wird im Fall des optimierten LNB oder einer Neuprogrammierung in situ der Prozessoren in dem Fall der DCSS. Wenn diese Änderungen häufig auftreten, ist diese Lösung weder für die Benutzer noch für die Betreiber akzeptabel.

Die vorgenannten Lösungen sind mit dem Nachteil verbunden, dass sie das Problem aufweisen, dass in dem Moment, in dem eine Änderung bei den Diensten der verschiedenen Bouquets stattfindet, der Betreiber eine neue Konfiguration des Systems vorzunehmen hat, um das Ausgangssignal anzupassen.

Der Erfindung liegt die Aufgabe zugrunde, ein System zum Empfang von Telekommunikationsignalen zu schaffen, insbesondere von Fernsehsignalen in MATV/SMATV-Netzen, welches den Empfang und die Verteilung der Fernsehdienste über das MATV / SMATV-Netz aufrecht erhält, obwohl sich die Übertragungsquelle (zum Beispiel ein Satellit) und/oder die Übertragungsparameter (wie beispielsweise Frequenz und/oder Polarität) der Signale, die die Dienste beinhalten, ändern.

Diese Aufgabe wird durch ein System zum Empfang von Telekommunikationsignalen, insbesondere von Fernsehsignalen, gelöst, das in den Patentansprüchen definiert ist.

Die Erfindung zeichnet sich durch eine Mehrzahl von Vorteilen aus.

Das erfindungsmäße System zum Empfang von Telekommunikationsignalen, insbesondere von Fernsehsignalen in MATV/SMATV-Netzen, weist wenigstens eine Signalaufnahmeeinheit mit wenigstens einer Antenne auf, wenigstens eine Umwandlungseinheit, wenigstens eine Kopfeinheit mit wenigstens einer Steuerungseinheit, wenigstens ein Verteilungsnetz, bestehend aus einem ersten Abschnitt, der die erste Umwandlungseinheit mit der Kopfeinheit verbindet, und aus einem zweiten Abschnitt, der die Kopfeinheit mit Fernsehempfangseinheiten verbindet. In diesem System empfängt die Antenne ein Fernsehsignal bestehend aus einem oder mehreren Transpondern (im Sinne von Frequenzen), die in ersten Frequenzen enthalten sind. Die Umwandlungseinheit ist in der Weise ausgestaltet, dass sie wenigstens eine erste Frequenz der Transponder des Fernsehsignals in wenigstens eine zweite Frequenz der Transponder des Fernsehsignals umwandelt. Die Steuerungseinheit wirkt auf die Umwandlungseinheit, die Kopfeinheit passt wenigstens einen Transponder des Fernsehsignals auf das Verteilungsnetz in den zweiten Frequenzen an.

In der Folge verteilt das Verteilungsnetz ER1 wenigstens einen Transponder des Fernsehsignals in den betreffenden zweiten Frequenzen bis zu den Fernsehempfangseinheiten.

Die Steuerungseinheit ist in der Weise ausgestaltet, dass sie von einem system-externen Signal gesteuert wird, wobei das systemexterne Signal über die Antenne und/oder über eine Schnittstelle des Systems von einem externen System empfangen wird.

Das System zeichnet sich durch den Vorteil aus, dass eine Änderung in der Konfiguration des Systems aufgrund von Änderungen in der Übertragungsquelle oder bei den Parametern der Übertragung der verteilten Dienste seitens des Betreibers mittels externer Mittel erfolgt. Damit besteht keine Notwendigkeit, auf irgendeinen Teil (Signalaufnahmeeinrichtung, Kopfeinrichtung, Verteilungsnetz, Fernsehempfangseinheiten) des Systems zuzugreifen, was die Komplexität von Änderungsprozessen hinsichtlich der Konfiguration oder von Aktualisierungen reduziert und damit die Gefahr von entsprechenden Fehlern, da weder ein Eingreifen durch den Benutzer noch spezialisiertes Personal erforderlich ist. Außerdem wird es ermöglicht, verschiedene Schnittstellen redundant zu benutzen, die eine korrekte Rekonfigurierung garantieren, für den Fall, dass irgendeine der Optionen nicht erfolgreich durchgeführt werden kann.

In vorteilhafter Weise ist bei Änderungen von Konfigurationen im Netz ein Eingreifen oder Mitwirken des Benutzers nicht erforderlich, da das System zu jedem Zeitpunkt aktualisiert und einsatzbereit ist, unabhängig von irgendwelchen Änderungen in der Übertragungsquelle und/oder bei Änderungen der Übertragungsparameter, die der Betreiber hinsichtlich der vertriebenen Dienste vornimmt.

Ein weiteres vorteilhaftes Ausführungsbeispiel des erfindungsgemäßen Systems ist dadurch gekennzeichnet, dass die Schnittstelle des Systems eine direkte Benutzerschnittstelle und/oder eine Schnittstelle zu Netzen mit verkabeltem Zugang zu einem externen System und/oder eine Schnittstellen mit drahtlosem Zugang wie beispielsweise WLAN und/oder Bluetooth und/oder 3G/4G ist.
Damit wird der Vorteil erzielt, dass die Übertragung von Steuersignalen an das System über allgemein verfügbare Netze erfolgen kann, wie beispielsweise ohne irgendeine Einschränkung die Netze ADSL oder DOCSIS (Netze mit verkabeltem Zugang), WiFi/WLAN-Netze und/oder Bluetooth und/oder 3G/4G (Netze mit drahtlosem Zugang), oder auch über eine USB-Verbindung (direkte Benutzerschnittstelle).

Ein weiteres vorteilhaftes Ausführungsbeispiel des erfindungsgemäßen Systems ist dadurch gekennzeichnet, dass das systemexterne Steuersignal wenigstens eine erste Information über die ersten Frequenzen und wenigstens eine zweite Information über die zweiten Frequenzen aufweist.

Damit wird der Vorteil erzielt, dass das System über die relevanten Daten der Konfiguration verfügt, ohne auf externe Speichermedien zugreifen zu müssen.
Ein weiteres vorteilhaftes Ausführungsbeispiel des erfindungsgemäßen Systems ist dadurch gekennzeichnet, dass die Steuerungseinheit beziehungsweise die Umwandlungseinheit in der Weise ausgestaltet ist, dass die Umwandlungseinheit wenigstens eine der ersten Frequenzen der Transponder des Fernsehsignals in wenigstens eine der zweiten Frequenzen der Transponder des Fernsehsignals umwandelt.
Damit wird in vorteilhafter Weise sichergestellt, dass das Steuersignal die Information enthält, die notwendig ist, um eine Änderung der LNB-Konfiguration vorzunehmen.

Ein weiteres vorteilhaftes Ausführungsbeispiel des erfindungsgemäßen Systems ist dadurch gekennzeichnet, dass die Steuerungseinheit in der Weise ausgestaltet ist, dass sie von dem einem zeitlich letzten empfangenen, externen Signal gesteuert wird, bis ein weiteres, aktualisiertes externes Steuersignal empfangen wird.

Damit kann die Steuerungseinheit in vorteilhafter Weise auch mit dem Steuersignal arbeiten, das sie von anderen, externen Medien erhält, die von dem Satellitenempfangsmedium entfernt sind.

Ein weiteres vorteilhaftes Ausführungsbeispiel des erfindungsgemäßen Systems ist dadurch gekennzeichnet, dass die Transponder des Fernsehsignals von wenigstens einem Satelliten ausgesendet sind.

Damit wird der Vorteil erzielt, dass System mit beliebigen Algorithmen oder Standardaktualisierungen (updates) arbeiten kann, die von Satelliten stammen, wie beispielsweise ohne irgendeine Einschränkung EN50607, EN50494 oder andere Protokolle, die von anderen Satellitendienstbetreibern verwendet werden.

Ein weiteres vorteilhaftes Ausführungsbeispiel des erfindungsgemäßen Systems ist dadurch gekennzeichnet, dass die ersten Frequenzen, die von der Antenne empfangen werden, in wenigstens einigen ersten Frequenzbändern angeordnet sind, insbesondere in einem ersten Frequenzband von 10.700 MHz bis 11.700 MHz und/oder in einem ersten Frequenzband von 11.700 MHz bis 12.750 MHz.

Damit wird der Vorteil erzielt, dass ein beliebiger Transponder aus dem Angebot im Satelliten ausgewählt werden kann.

Ein weiteres vorteilhaftes Ausführungsbeispiel des erfindungsgemäßen Systems ist dadurch gekennzeichnet, dass die zweiten Frequenzen, die von dem Verteilungsnetz verteilt werden, in wenigstens einigen zweiten Frequenzbändern angeordnet sind, insbesondere in einem zweiten Frequenzband von 950 MHz bis 2.150 MHz.

Damit wird der Vorteil erzielt, dass dasselbe Verteilungsnetz benutzt werden kann, das üblicherweise für die Verteilung der Satellitendienste benutzt wird, so dass es weder notwendig ist, Elemente des Verteilungsnetzes zu ändern, noch dass es notwendig ist, neue Elemente hinzuzufügen.

Vorteilhaft ist weiterhin, dass das System in automatischer Form arbeitet und dass jedwede Änderung in der Konfiguration der Dienste in dem Signalaufnahmeelement umgesetzt wird.

Ein weiteres vorteilhaftes Ausführungsbeispiel des erfindungsgemäßen Systems ist dadurch gekennzeichnet, dass die Steuerungseinheit mit der Umwandlungseinheit über einen ersten Abschnitt des Verteilungsnetzes und/oder über externe Medien mit dem System verbunden ist.

Damit wird der Vorteil erzielt, dass das erfindungsgemäße System unabhängig von dem Verteilungsnetz und von den (Fernseh-) Empfangselementen ausgestaltet ist, die die Benutzer einsetzen.

In einem weiteren vorteilhaften Ausführungsbeispiel des Systems gemäß der Erfindung besteht die Steuerungsvorrichtung aus einer Steuerungsschaltung, einer Eingangskoppeleinrichtung, einem digitalen Demodulator, einem Analysator des Steuerungssignals, einer Umwandlungseinheit des Steuersignals, mit dem die Steuerungsschaltung gesteuert wird, einer physischen Schnittstelle, einem Schalter, einer Speiseschnittstelle, einer Systemschnittstelle und einem Ausgang.
Damit wird der Vorteil erzielt, dass die Steuerungsschaltung automatisch das Steuerungssignal erkennt und bearbeitet, das gemeinsam mit den Satellitendiensten in beliebigen Algorithmen oder Standards übermittelt wird, die zur Zeit oder zukünftig benutzt werden.

Im Folgenden werden vorteilhafte Ausführungsformen des erfindungsgemäßen Systems zum Empfang von Telekommunikationsignalen, insbesondere von Fernsehsignalen in MATV/SMATV-Netzen beispielhaft, ohne eine Einschränkung, beschrieben.

Es zeigt
- Figur 1: ein Ausführungsbeispiel eines erfindungsgemäßen Systems zum Empfang von Telekommunikationsignalen,
- Figur 2: eine Frequenzkarte für das System nach Figur 1, und
- Figur 3: ein bevorzugtes Ausführungsbeispiel einer Steuerungseinheit des Systems nach Figur 1.

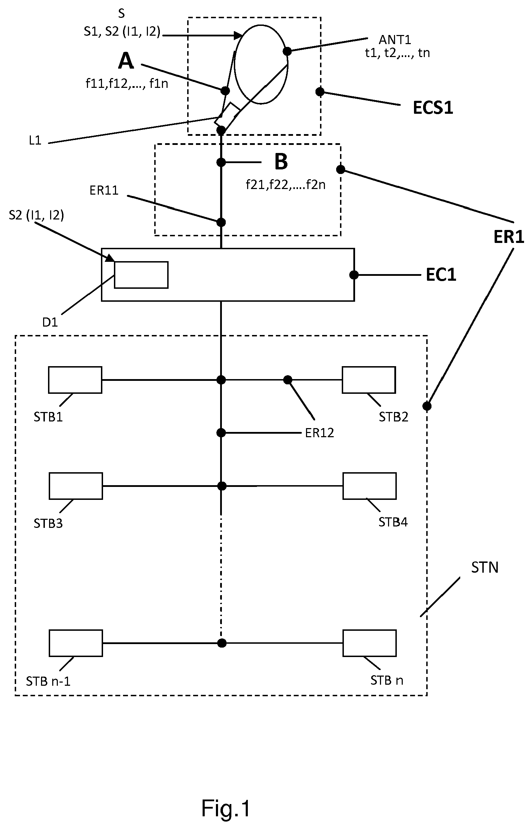

Figur 1 zeigt ein erfindungsgemäßes System zum Empfang von Telekommunikationsignalen, insbesondere von Fernsehsignalen in MATV/SMATV-Netzen. Wie Figur 1 zeigt, besteht das System aus wenigstens einer Signalaufnahmeeinheit ECS1, aus wenigstens einer Kopfeinheit EC1 und aus wenigstens einem Verteilungsnetz ER1. Die Signalaufnahmeeinheit ECS1 hat die Aufgabe, ein Signal S zu empfangen, das von einem Übertragungssystem (Übertagungsquelle) stammt, beispielsweise von einem Satelliten. Das Signal S kann wenigstens ein Signal S1 umfassen und optional ein externes Steuersignal S2, wobei das Signal S1 einem Fernseh- und/oder einem Datensignal entspricht und wobei das Signal S2 ein externes Steuerungssignal ist. Dieses Signal S2 kann zu unterschiedlichen Zeitpunkten empfangen werden, es wird dementsprechend mit S21, S22, ..., S2i, S2i+1, ..., S2n bezeichnet.

Die Signalaufnahmeeinheit ECS1 weist wenigstens eine Antenne ANT1 und eine Umwandlungseinheit L1 auf. Die Antenne ANT1 empfängt das Signal S, das wie zuvor beschrieben das Signal S1 enthält und zusätzlich in einer in einer bevorzugten Ausführungsform das externe Steuersignal S2. Das Signal S1 enthält einen oder mehrere Transponder t1, t2, ..., tn, die in ersten Frequenzen f11, f12, ..., f1n in ersten Frequenzbändern b11, b12, ..., b1n angeordnet sind, die beispielsweise, ohne darauf eingeschränkt zu sein, dem Band von 10.700 MHz bis 11.700 MHz und vertikaler Polarität, dem Band von 11.700 MHz bis 12.750 MHz und horizontaler Polarität und dem Band von 11.700 MHz bis 12.750 MHz und vertikaler Polarität entsprechen.

Die Kopfeinheit EC1 empfängt das Ausgangssignal der Signalaufnahmeeinheit ECS1, bearbeitet es und konditioniert es, um es in angemessener Beschaffenheit in das Verteilungsnetz ER1 einzufügen. Das Verteilungsnetz ER1 empfängt das Signal, das von der Kopfeinheit EC1 stammt und leitet es an die Fernsehempfangseinheiten STB1, STB2, ..., STBn-1, STBn weiter.
Die Umwandlungseinheit L1 wandelt wenigstens eine der ersten Frequenzen f11, f12, f13, ..., f1n der Transponder t1, t2,..., tn des Signals S1 (Punkt A) in mindestens eine der zweiten Frequenzen f21, f22, f32, ..., f2n der Transponder t1 ,t2,..., tn des Signals S1 (Punkt B) um, wobei diese zweiten Frequenzen in zweiten Frequenzbändern b21, b22,..., b2n zum Beispiel von 950 MHz bis 2.150 MHz enthalten sind.

In einer bevorzugten Ausführungsform der Erfindung empfängt die Signalaufnahmeeinheit ECS1 auch das Steuersignal S2, das ein systemexternes Signal ist und übermittelt es an die Kopfeinheit EC1.

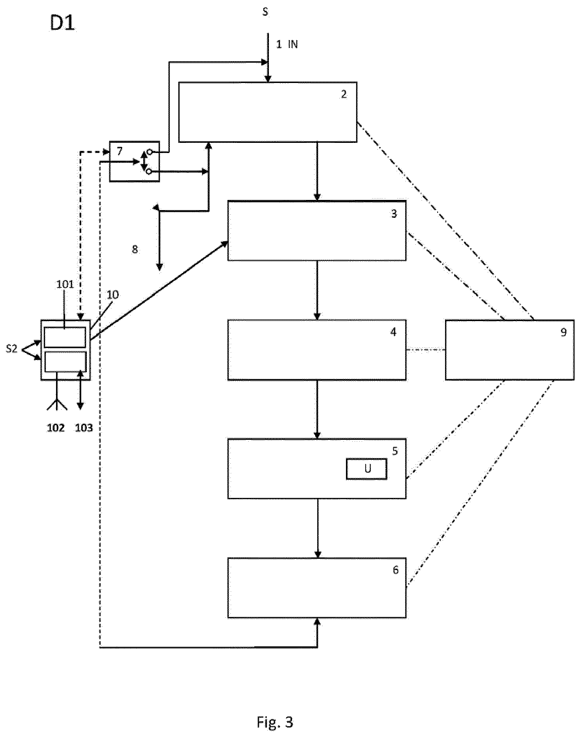

Die Kopfeinheit EC1 empfängt das Signal S einschließlich mit dem wenigstens einen Signal S1, das von der Umwandlungseinheit L1 stammt. Dieses Signal S1 (Punkt B) enthält einen oder mehrere Transponder t1, t2,..., tn, die in den zweiten Frequenzen f21, f22, f23, ..., f2n in zweiten Frequenzbändern b21, b22,..., b2n zum Beispiel von 950 MHz bis 2.150 MHz enthalten sind. Die Kopfeinheit EC1 besteht im wesentlichen aus Verstärkungseinheiten und/oder aus Bearbeitungseinheiten und/oder aus Transmodulationseinheiten und Umwandlungseinheiten, wobei diese Einheiten das Signal S1 für die spätere Verteilung über das Verteilungsnetz ER1 anpassen. Ebenso verfügt die Kopfeinheit EC1 über wenigstens eine Steuereinheit D1, die direkt mit dem Ausgang der Umwandlungseinheit L1 verbunden ist, die an ihrem Eingang IN, 1 (Figur 3) das Ausgangssignal S dieser Umwandlungseinheit empfängt. Die Kopfeinheit kann wenigstens einen Transponder des Fernsehsignals auf das Verteilungsnetz in den zweiten Frequenzen anpassen.

Das Verteilungsnetz ER1 hat die Aufgabe, das Signal S1 an die verschiedenen Fernsehempfangseinheiten ("Set Top Box") STB1, STB2, ..., STBn-1, STBn zu verteilen. Es besteht aus einem ersten Abschnitt ER11, der die Umwandlungseinheit L1 der Signalaufnahmeeinrichtung ECS1 mit der Steuerungseinheit D1 in der Kopfeinheit EC1 verbindet, und aus einem zweiten Abschnitt ER12, der den Ausgang der Kopfeinheit EC1 mit den Fernsehempfangseinheiten STB1, STB2, ..., STBn-1, STBn verbindet. Das Signal S1, das über das Verteilungsnetz verteilt wird, enthält einen oder mehrere Transponder t1, t2,..., tn, die in zweiten Frequenzen f21, f22, f23, ..., f2n angeordnet sind

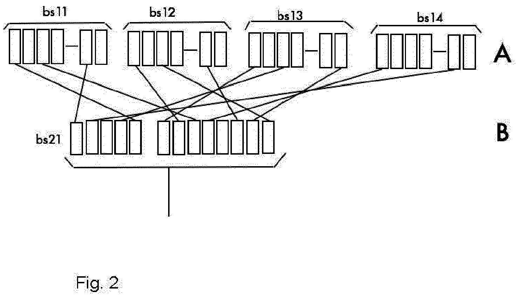

Figur 2 zeigt eine Frequenzkarte in einem erfindungsgemäßen System zum Empfang von Fernsehsignalen. Wie aus Figur 2 zu erkennen ist, liegt das Signal S1 am Eingang der Umwandlungseinheit der Signalaufnahmeeinheit ECS1 (Punkt A) über Transponder t1, t2,..., tn, an in betreffenden ersten Frequenzen f11, f12 ,f13, ..., f1n, die in ersten Frequenzbändern b11 und/oder b12 und/oder b13 und/oder b14 angeordnet sind, die beispielsweise den Bändern von 10.700 MHz bis 11.700 MHz mit horizontaler Polarität und von 10.700 MHz bis 11.700 MHz in vertikaler Polarität und von 11.700 MHz bis 12.750 MHz in horizontaler Polarität und von 11.700 MHz bis 12.750 MHz in vertikaler Polarität.

Am Ausgang der Umwandlungseinheit L1 der Signalaufnahmeeinheit ECS (Punkt B) besteht das Signal S1 aus einem oder aus mehreren Transpondern t1, t2,..., tn, die in betreffenden zweiten Frequenzen f21, f22, f23, ..., f2n angeordnet sind, die in zweiten Frequenzbändern b21, b22,.., b2n zum Beispiel von 950 MHz bis 2.150 MHz angeordnet sind. Längs des Verteilungsnetzes ER1 bis zu den Fernsehempfangseinheiten STB1, STB2, ..., STBn-1, STBn besteht das Signal S1 aus einem oder mehreren Transpondern t1, t2,..., tn, die in den betreffenden zweiten Frequenzen f21, f22, f23, ..., f2n angeordnet sind.

Das Steuersignal S2 besteht in einer bevorzugten Ausführungsform aus wenigstens einer ersten Information I1, die sich auf die betreffenden ersten Frequenzen f11, f12, ..., f1n bezieht, und aus wenigstens einer zweiten Information I2, die sich auf die betreffenden zweiten Frequenzen f21, f22, ..., f2n bezieht, und/oder aus einer Programmierungsinformation und/oder einer Überwachungsinformation und/oder einer Steuerungsinformation.

Figur 3 zeigt eine bevorzugte Ausführungsform einer Steuerungsvorrichtung D1 gemäß der Erfindung. Dabei bezeichnen durchgehende Linien den Fluss der Telekommunikationsignale, während gestrichelte Linien Steuersignale bezeichnen und Strich-Punkt-Linien Speisesignale bezeichnen. Diese Steuerungsvorrichtung D1 besteht aus einer Eingangskoppeleinheit 2, über die das Telekommunikationsignal S (zum Beispiel Telekommunikationsignal über Satellit) vom Eingang 1 IN kommend empfangen wird.

In einer bevorzugten Ausführungsform der Erfindung ist dieses Signal S im Allgemeinen zusammengesetzt aus einem Fernseh- und/oder Datensignal S1 und/oder Daten und einem Steuersignal S2 und/oder einem Programsignal und/oder Überwachung. In diesem Ausführungsbeispiel gemäß der Erfindung besteht das Signal S1 aus einem oder aus mehreren Transpondern t1, t2,..., tn in betreffenden zweiten Frequenzen f21, f22, f23, ..., f2n, die in zweiten Frequenzbändern b21, b22,..., b2n angeordnet sind, die beispielsweise dem Band von 950 MHz bis 2.150 MHz entsprechen. Das Signal S2 ist aus einem Steuersignal geformt, das wenigstens aus einer ersten Information I1 über erste Frequenzen f11, f12, ..., f1 n und aus einer zweiten Information I2 über zweite Frequenzen f21, f22, ..., f2n besteht.

In einem weiteren Ausführungsbeispiel des erfindungsgemäßen Systems wird das Steuersignal S2 über die System-Schnittstelle 10 empfangen. Diese Schnittstelle ist in der Weise ausgestaltet, dass eine direkte Verbindung mit einer Programmierungseinrichtung (zum Beispiel USB-Verbindung und/oder RS-232), Verbindungsmittel mit Netzen über drahtlosen Zugang (wie beispielsweise WiFi/WLAN und/oder Bluetooth und/oder 3G/4G/5G) oder Verbindungsmittel zu Netzen mit verkabeltem Zugang (zum Beispiel optische Kabel und/oder Koaxialkabel und/oder strukturierte Verkabelung). Damit verfügt die Steuerungseinrichtung D1 über eine direkte Benutzer-Schnittstelle 101, über eine Schnittstelle 102 zu Netzen mit einem drahtlosen Zugang und über eine Schnittstelle 103 zu Netzen mit verkabeltem Zugang. In einem nicht einschränkenden Ausführungsbeispiel steht eine entsprechende Schnittstelle im Fall von Fern-Aktualisierungen von Firmware und/oder von Programänderungen der Kanäle zur Verfügung, ohne dass das Steuersignal S2 und/oder das Programmierungssignal und/oder das Überwachungssignal zusammen mit den Fernseh- und/oder Datensignalen S1 in dem Signal S, das von einem Signalübertragungssystem, zum Beispiel von einem Satelliten, stammt, übertragen werden müsste.

Die Signale S durchlaufen eine Eingangskoppeleinheit 2. Die Eingangskoppeleinheit 2 leitet den größten Teil der Leistung der Eingangssignale S an den Ausgang 8 und den weiteren Teil der Leistung der Eingangssignale S an die Einheiten zur Bearbeitung der Signale weiter, zu denen ein digitaler Demodulator 3 gehört, eine Analyseeinheit 4 für das externe Steuersignal S2 (zum Beispiel eine Analyseeinheit für Tafeln "transport stream") und eine Umwandlungseinheit 5 für das externe Steuersignal S2 (zum Beispiel eine Analyseeinheit für Tafeln "transport stream"), die Kommandos in Aufträge für eine Steuerungsschaltung U und eine physische Schnittstelle 8 umwandelt.

Für den Fall, dass die Steuersignale S2 über die System-Schnittstelle 10 empfangen werden, so übermittelt diese Schnittstelle die Signale S2 an den digitalen Demodulator 3.

Der digitale Demodulator 3 führt die Demodulation der Eingangssignale S durch und erlangt die Steuersignale S2, wenn zum Beispiel ein Fernsehsignal ausgehend von dem "transport stream" MPEG2 vorliegt. In einem nicht einschränkenden Ausführungsbeispiel kann der digitale Demodulator 3 DVB-Signale (DVBS/DVBS2, DVBT/DVBT2, DVBC/DVBC2) und/oder Signale 8PSK TC und/oder ATSC und/oder ISDB-T bearbeiten.

Die Analyseeinheit 4 für das externe Steuersignal S2 analysiert und extrahiert aus dem Signal S2 die Steuerinformation und/oder die Überwachungsinformation und die Programmierinformation beispielsweise ausgehend von den Tafeln "transport stream".

Nach der Analyse der Tafeln "transport stream", die von der Analyseeinheit 4 für das Steuersignal S2 vorgenommen wird, wandelt die Umwandlungseinheit 5 für das Steuersignal S2 die Daten der Tafeln "transport stream" in Kommandos um, die von der die Steuerungseinheit D1 an die Elemente der MATV/SMATV-Netze übermittelt werden können, beispielsweise von der Signalaufnahmeeinheit ESC1 und/oder zu der Kopfeinheit EC1 und/oder zu dem Verteilungsnetz ER1, wobei die genannten Einheiten und das Netz gesteuert und/oder überwacht und/oder programmiert werden können. Insbesondere übermittelt die Steuereinheit D1 der Umwandlungseinheit L1 eine erste Information I1, die die betreffenden ersten Frequenzen f11, f12 ,..., f1n betrifft, und eine zweite Information I2, die die betreffenden zweiten Frequenzen f21, f22, ..., f2n betrifft. Die Umwandlungseinheit L1 wandelt auf Basis der ersten Information I1 und der zweiten Information I2 wenigstens eine der betreffenden ersten Frequenzen f11, f12, f13, ..., f1n der Transponder t1, t2,..., tn des Fernsehsignals S1 (Punkt A) in wenigstens eine der betreffenden zweiten Frequenzen f21, f22, f23, ..., f2n der Transponder t1, t2,..., tn des Fernsehsignals S1 (Punkt B) um, wobei diese betreffenden zweiten Frequenzen in zweiten Frequenzbändern b21, b22,..., b2n, zum Beispiel von 950 MHz bis 2.150 MHz angeordnet sind.

In einem weiteren Ausführungsbeispiel gemäß der Erfindung schickt die Steuerungsvorrichtung D1 an alle Elemente der Verteilung, zum Beispiel das Signalaufnahmesystem ECS1 (Antenne ANT1, Umwandlungseinheit L1) und/oder die Kopfeinheit (Verstärker, Prozessoren, Modulatoren, Transmodulatoren, Umwandlungseinheiten...) und/oder zum Verteilungsnetz und/oder die Fernsehempfangseinheiten STB1, STB2, ..., STBn-1, STBn Aktualisierungen der Firmware und/oder der Programmierungstafeln, zum Beispiel Reoganisierungen der Fernsehkanäle über Satellit oder neue Anordnungen der Kanäle des digitalen terrestrischen Radios oder Kabels.

Die in der Umwandlungseinrichtung 5 generierten Kommandos des externen Signals S2 können standardkonform hinsichtlich des Standards CENELEC EN50607 ("Satellite signal distribution over a single coaxial cable-second generation" ("Satelliten-Signal-Verteilung über ein einzelnes Koaxialkabel - zweite Generation")) sein oder privaten Kommandos entsprechen.

Schließlich wandelt die physische Schnittstelle 6 die Kommandos in physische Signale um, um sie der Kopfeinheit EC1 zu übermitteln. In einem Ausführungsbeispiel gemäß der Erfindung kann die physische Schnittstelle 6 das Protokoll DISEqC X.X sein, das für die Steuerung der Vorrichtungen LNB durch die Set Top Boxen STB oder Multischalteranordnungen verwendet wird. In diesem Fall empfängt auch die physische Schnittstelle 6 die Auftrags- beziehungsweise Bestätigungs-Signale ACK mit denen die Programmierung von Vorrichtungen durchgeführt wurde, wobei andernfalls angemessene Maßnahmen zu ergreifen sind, um die entsprechenden Aufgaben zu erledigen.

In einem weiteren nicht einschränkenden Ausführungsbeispiel der Erfindung ist die physische Schnittstelle 6 ein Steuerkanal MPEG2 TS, der im selben Format Modulationsformat moduliert ist wie die Signale S1. Dieser Kanal kann an die Bearbeitungseinheiten und/oder die Signalverstärkungseinheiten übermittelt werden. Dies erfolgt insbesondere, wenn beispielsweise umfangreiche Fern-Änderungen der Firmware der SMATV/MATV vorgenommen werden und/oder Änderungen der Konfiguration oder Programmierung, wobei die Änderungen von dynamischen Zuordnungen der Frequenzen abgeleitet werden.

Die Steuerungsvorrichtung D1 verfügt über eine Versorgungsschnittstelle 9 zur Verbindung mit einer Speisequelle und zur Speisung aller Schaltungselemente von D1, wie beispielsweise in Figur 3 dargestellt. In einem weiteren nicht einschränkenden Ausführungsbeispiel der Erfindung wird die Steuerungsvorrichtung D1 über den Eingang und/oder den Ausgang und/oder über die Eingangskoppeleinheit 2 gespeist, wobei alle Schaltungselemente von D1 gespeist werden können.

Schließlich beinhaltet die Steuerungsvorrichtung D1 eine direkte Benutzerschnittstelle 10, in der Betriebsparameter des Systems programmiert werden, zum Beispiel die Eingangsfrequenz oder die Eingangsfrequenzen und Parameter der Suche von Steuersignalen, Programmierung und/oder Überwachung, PIDs der zu analysierenden Tafeln, zu implementierende Kommandos, Typ der zu implementierenden physischen Ausgangsschnittstelle und Position/Schaltstellung des Schalters, etc.

### Bezugszeichenliste

- ECS1: Signalaufnahmeeinheit
- ANT1: Antenne
- L1: Umwandlungseinheit
- EC1: Kopfeinheit
- D1: Steuerungseinheit
- ER1: Verteilungsnetz
- ER11: Erster Abschnitt des Verteilungsnetzes
- ER12: Zweiter Abschnitt des Verteilungsnetzes
- STB1,STB2, ..., STBn-1, STBn: Fernsehempfangseinheiten
- S: Signal, das von einem TelekommunikationsignalÜbertragungssystem stammt
- S1: Fernseh- und/oder Datensignale
- S2: Steuersignal
- S21, S22, S2i, S2i+1, ..., S2n: Steuersignal, das zu verschiedenen Zeitpunkten auftritt
- I1: Erste Information des Signals S2
- I2: Zweite Information des Signals S2
- f11, f12, ..., f1n: Erste Frequenzen
- f21, f22, ..., f2n: Zweite Frequenzen
- b11, b12, ..., b1n n: Erste Frequenzbänder
- b21, b22, ..., b2n: Zweite Frequenzbänder
- t1, t2, ..., tn: Transponder
- U: Steuerschaltung
- 1, IN: Eingang
- 2: Eingangskoppeleinheit
- 3: Digitaler Demodulator
- 4: Analyseeinheit des externen Steuersignals S2
- 5: Umwandlungseinheit des Steuersignals S2
- 6: Physische Schnittstelle
- 7: Schalter
- 8, OUT: Ausgang
- 9: Speise-Schnittstelle
- 10: System-Schnittstelle
- 101: Direkte Benutzer-Schnittstelle
- 102: Schnittstelle für Netze mit drahtlosem Zugang
- 103: Schnittstelle für Netze mit verkabeltem Zugang

## Patentansprüche

1. System zum Empfang von Telekommunikationsignalen, insbesondere von Fernsehsignalen in MATV/SMATV-Netzen, das aufweist
- wenigstens eine Signalaufnahmeeinheit (ECS1) mit wenigstens einer Antenne (ANT1) und mit wenigstens einer Umwandlungseinheit (L1),
- wenigstens eine Kopfeinheit (EC1) mit wenigstens einer Steuerungseinheit (D1),
- wenigstens ein Verteilungsnetz (ER1), bestehend aus einem ersten Abschnitt (ER11), der die Umwandlungseinheit (L1) mit der Kopfeinheit (EC1) verbindet, und aus einem zweiten Abschnitt (ER12), der die Kopfeinheit (EC1) mit Fernsehempfangseinheiten (STB1, STB2,..., STBn-1, STBn) verbindet,
- wobei die Antenne (ANT1) ein Fernsehsignal (S1) bestehend aus einem oder mehreren Transpondern (t1, t2, ..., tn) empfängt, die in ersten Frequenzen (f11, f12, ..., f1n) angeordnet sind;
- wobei die Umwandlungseinheit (L1) in der Weise ausgestaltet ist, dass sie wenigstens eine erste Frequenz (f11, f12, ..., f1 n) der Transponder (t1, t2, ..., tn) des Fernsehsignals (S1) in wenigstens eine zweite Frequenz (f21, f22, ..., f2n) der Transponder (t1, t2, ..., tn) des Fernsehsignals (S1) umwandelt,
- wobei die Steuerungseinheit (D1) auf die Umwandlungseinheit (L1) wirkt,
- wobei die Kopfeinheit (EC1) wenigstens einen Transponder (t1, t2, ..., tn) des Fernsehsignals (S1) in den zweiten Frequenzen (f21, f22, ..., f2n) an das Verteilungsnetz (ER1) anpasst, und
- wobei das Verteilungsnetz (ER1) wenigstens einen Transponder (t1, t2, ..., tn) des Fernsehsignals (S1) in den zweiten Frequenzen (f21, f22, ..., f2n) bis zu den Fernsehempfangseinheiten (STB1, STB2,..., STBn-1, STBn) verteilt,
**dadurch gekennzeichnet,**
- **dass** die Steuerungseinheit (D1) in der Weise ausgestaltet ist, dass sie von einem systemexternen Signal (S2) gesteuert wird, und
- **dass** das systemexterne Signal (S2) über die Antenne (ANT1) und/oder über eine Schnittstelle (10) des Systems mit einem externen System empfangen ist.

2. System nach Anspruch 1 **dadurch gekennzeichnet,**
- **dass** die Schnittstelle (10) des Systems (10) eine direkte Benutzerschnittstelle (101) und/oder eine Schnittstelle (102) mit drahtlosem Zugang und/oder eine Schnittstelle (103) mit verkabeltem Zugang ist.

3. System nach Anspruch 1 oder 2, **dadurch gekennzeichnet,**
- **dass** das systemexterne Steuersignal (S2) wenigstens eine erste Information (11) über die ersten Frequenzen (f11, f12, ..., f1 n) und wenigstens eine zweite Information (12) über die zweiten Frequenzen (f21, f22, ..., f2n) aufweist.

4. System nach einer der vorstehenden Ansprüche, **dadurch gekennzeichnet,**
- **dass** die Steuerungseinheit (D1) in der Weise ausgestaltet ist, dass die Umwandlungseinheit (L1) wenigstens eine der ersten Frequenzen (f11, f12, ...; f1n) der Transponder (t1, t2, ..., tn) des Fernsehsignals (S1) in wenigstens eine der betreffenden zweiten Frequenzen (f21, f22, ..., f2n) der Transponder (t1, t2, ..., tn) des Fernsehsignals (S1) umwandelt.

5. System nach einem der vorstehenden Ansprüche, **dadurch gekennzeichnet,**
- **dass** die Steuerungseinheit (D1) in der Weise ausgestaltet ist, dass sie von dem einem zeitlich letzten empfangenen, externen Signal (S2i) gesteuert wird, bis ein weiteres, aktualisiertes externes Steuersignal (S2i+1) empfangen wird.

6. System nach einem der vorstehenden Ansprüche, **dadurch gekennzeichnet,**
- **dass** die Transponder (t1, t2, ..., tn) des Fernsehsignals (S1) von wenigstens einem Satelliten ausgesendet sind.

7. System nach einem der vorstehenden Ansprüche, **dadurch gekennzeichnet,**
- **dass** die ersten Frequenzen (f11, f12, ..., f1 n), die von der Antenne (ANT1) empfangen werden, in wenigstens einigen ersten Frequenz bändern (b11, b12, ..., b1n) angeordnet sind, insbesondere in einem ersten Frequenzband von 10.700 MHz bis 11.700 MHz und/oder in einem ersten Frequenzband von 11.700 MHz bis 12.750 MHz.

8. System nach einem der vorstehenden Ansprüche, **dadurch gekennzeichnet,**
- **dass** die zweiten betreffenden Frequenzen (f21, f22, ..., f2n), die von dem Verteilungsnetz (ER1) verteilt werden, in wenigstens einigen zweiten Frequenzbändern (b21, b22, ..., b2n) angeordnet sind, insbesondere in einem zweiten Frequenzband von 950 MHz bis 2.150 MHz.

9. System nach einem der vorstehenden Ansprüche, **dadurch gekennzeichnet,**
- **dass** die Steuerungseinheit (D1) mit der Umwandlungseinheit (L1) über den ersten Abschnitt (ER11) des Verteilungsnetzes und/oder über externe Medien mit dem System verbunden ist.

10. Steuerungsvorrichtung (D1) für ein System nach einem der vorstehenden Ansprüche, **dadurch gekennzeichnet, dass** dieses wenigstens aufweist
- eine Eingangs-Koppeleinheit (2);
- einen digitaler Demodulator (3);
- eine Analyseeinheit (4) des Steuersignals (S2);
- eine Steuerungsschaltung (U);
eine Umwandlungseinheit (5) des Steuersignals (S2) zur Steuerung der Steuerungsschaltung (U);
- eine physische Schnittstelle (6);
- einen Schalter (7);
- eine Speise-Schnittstelle (9);
- eine System-Schnittstelle (10); und
- einen Ausgang (8).

11. Steuerungsvorrichtung (D1) für ein System nach Anspruch 10, **dadurch gekennzeichnet**
- **dass** die System-Schnittstelle (10) aus
- einer direkten Benutzerschnittstelle (101) und/oder
- einer Schnittstelle (102) für Netze mit drahtlosem Zugang;
und/oder
- einer Schnittstelle (103) für Netze mit verkabeltem Zugang besteht.
